# EUROPÄISCHE PATENTSCHRIFT

(11) **EP 3 001 310 B1**
(45) Veröffentlichungstag und Bekanntmachung des Hinweises auf die Patenterteilung: **30.10.2019**
(21) Anmeldenummer: 14186161.7
(22) Anmeldetag: 24.09.2014
(51) Int. Cl.: G06F 8/65

(54) **Verfahren und Einrichtung zur Aktualisierung von Firmware für Komponenten einer industriellen Automatisierungsanordnung**
Method and apparatus for updating firmware for components of an industrial automation system
Procédé et dispositif d'actualisation de micrologiciels pour des composants d'un système d'automatisation industriel

(43) Veröffentlichungstag der Anmeldung: 30.03.2016
(73) Patentinhaber: Siemens Aktiengesellschaft, 80333 München (DE)
(72) Erfinder: Czichy, Heinz, 45772 Marl (DE); Schreiter, Michael, 53859 Niederkassel-Rheidt (DE); Wolf, Gerd-Theo, 41363 Jüchen (DE)

(56) Entgegenhaltungen:
- US-A1- 2011 072 423

## Beschreibung

Die Erfindung betrifft ein Verfahren zur Aktualisierung von Firmware für Komponenten einer industriellen Automatisierungsanordnung gemäß dem Oberbegriff des Patentanspruchs 1, und eine Einrichtung zur Aktualisierung von Firmware für Komponenten einer industriellen Automatisierungsanordnung gemäß dem Oberbegriff des Patentanspruchs 12.

Komponenten (z.B. mikroprozessorgesteuerte Geräte, Module, speicherprogrammierbare Steuerungen oder dgl.) der industriellen Automatisierungs- und Antriebstechnik umfassen regelmäßig eine Firmware, welche in das Gerät "eingebettet" (embedded) ist und dabei meist fest mit der Hardware verbunden und in einem nichtflüchtigen Speicher, z.B. in einem EPROM, EEPROM, Flash-Speicher oder ROM, gespeichert ist. Aufgabe der Firmware ist die Steuerung der spezifischen Hardware der jeweiligen Komponente und das Zusammenwirken der Komponenten in einem Automatisierungsverbund.

Firmware kann meist aktualisiert werden; dies ermöglicht die flexible Anpassung von Funktionen sowie Funktionserweiterungen und Fehlerbereinigungen. Bei Anwendung von mehrfach beschreibaren Speichern innerhalb der Komponenten- oder Gerätehardware können Firmwareaktualisierungen ("Update", "Upgrade") oder allgemein Firmwareänderungen durch Aufspielen oder Aufrüsten (Update) einer neuen Firmware in das betreffende Gerät unter Berücksichtigung der Automatisierungslösung durchgeführt werden; situationsbedingt kann eine Firmwareänderung auch erforderlichenfalls ein "Downgrade" auf einen älteren Ausgabestand sein. Allgemein sollen mit "Aktualisierung" oder "Firmwareupdate" im Folgenden jegliche Änderungen einer Firmware bezeichnet werden. Ein Firmwareupdate kann dabei beispielsweise mittels Buskommunikation, durch Punkt zu Punkt-Kopplung oder direkt unter Verwendung eines lokalen Speichermediums durchgeführt werden.

Die Druckschrift US2011/0072423A1 - Fukata "Firmware Update Apparatus and Program" zeigt die Planung und Durchführung eines Firmware-Updates einer Vielzahl Komponenten unter Zuhilfenahme einer Kompatibilitätsmatrix.

Aktualisierungen von Firmware werden nicht nur zur Erhöhung der Funktionalität oder für Fehlerbereinigungen vorgenommen, sondern sind meist auch notwendig, wenn im Servicefall Baugruppen oder andere Komponenten ausgetauscht werden müssen. Die neu eingesetzten Komponenten weisen nicht notwendigerweise denselben Firmware-Ausgabestand auf, wie die zu ersetzenden. Dabei ist zu beachten, dass Komponenten oft nur dann zusammenwirken können, wenn sie mit zueinander passenden Firmware-Versionen ausgestattet sind; anderenfalls kann die Funktion der Automatisierungsanordnung infolge von Inkonsistenzen beeinträchtigt sein. Insbesondere Komponenten aus Ersatzteillagern oder dgl. sind oft hinsichtlich der Firmware veraltet, während neu beschaffte Komponenten eine Firmware mit einem Ausgabestand aufweisen können, der noch nicht vom Anwender für den jeweiligen Anwendungsfall im Anlagentest freigegeben ist. Beispielsweise muss im Servicefall die Kompatibilität der Firmware des Automatisierungsprojektes, der installierten Hardware und des Austauschgerätes gewährleistet sein. Zudem ist die Firmware manchmal auf verschiedenen, nicht klar definierten Wegen, z.B. Internet, Datenträger zu beziehen. Die Handhabung des Firmware Updates erfordert aufgrund der Komplexität industrieller Anlagen zudem oft Expertenwissen und ist damit aufwändig und fehleranfällig.

Es ist daher eine Aufgabe der vorliegenden Erfindung, die Aktualisierung von Firmware in industriellen Automatisierungsanordnungen zu vereinfachen und dabei Inkonsistenzen zu vermeiden.

Es ist eine Kernidee der erfindungsgemäßen Lösung dieser Aufgabe, ein Engineeringsystem oder eine andere Einrichtung zur teil- oder vollautomatischen Aktualisierung von Firmware vorzusehen, wobei ein "intelligentes Firmware Management " eine Prüfung der Kompatibilität der zur Verfügung stehenden bzw. für einen Einsatz vorgesehenen Firmware-Versionen übernimmt und erforderlichenfalls eine Priorisierung der Firmware-Updates unterstützt, wobei dem Anwender die Notwendigkeit der Firmware-Updates dargestellt wird. Vorteilhaft ist auch eine "Firmware-Simulation", welche vor dem eigentlichen Firmware-Updateprozess vorzusehen ist.

Die Aufgabe wird insbesondere durch ein Verfahren gemäß Patentanspruch 1 und durch eine Einrichtung gemäß Patentanspruch 12 gelöst.

Dabei ist ein Verfahren zur Aktualisierung von Firmware für Komponenten einer industriellen Automatisierungsanordnung vorgesehen, wobei für die Komponenten jeweils eine Anzahl Versionen der jeweiligen Firmware in jeweils unterschiedlichem Ausgabestand verfügbar ist, und wobei Kompatibilitätsbeziehungen zwischen zumindest einigen Versionen der Firmware unterschiedlicher Komponenten gegeben sind. Dabei ist der Einsatz einer Einrichtung zur Aktualisierung der Firmware einiger oder aller Komponenten der industriellen Automatisierungsanordnung vorgesehen, wobei in einem ersten Schritt für eine Anzahl, vorzugsweise alle, Komponenten jeweils mindestens paarweise die Kompatibilitätsbeziehungen zwischen den verschiedenen Versionen der Firmware der jeweils betrachteten Komponenten in einer Speichereinrichtung der Einrichtung gespeichert werden, in einem zweiten Schritt Informationen über die in den Komponenten aktuell verwendeten Versionen der jeweiligen Firmware in einer oder der Speichereinrichtung der Einrichtung gespeichert werden, in einem dritten Schritt anhand der gespeicherten Kompatibilitätsinformationen und der Informationen über die aktuell verwendeten Versionen die zu aktualisierenden Komponenten und die dabei jeweils verwendbaren Versionen der jeweiligen Firmware ermittelt werden, und wobei in einem vierten Schritt die zu aktualisierenden Komponenten automatisch mit Firmware in der jeweils ermittelten Version aktualisiert werden. Eine bessere Betriebssicherheit wird erreicht, indem erfindungsgemäß vor dem vierten Schritt eine funktionale Simulation zumindest eines Teils der Automatisierungsanordnung unter Berücksichtigung der durch die Aktualisierung geplante Konstellation der Firmware durchgeführt wird. Durch den Einsatz eines solchen Verfahrens wird der Aktualisierungsprozess weitgehend automatisiert, wobei Inkonsistenzen und daraus resultierende Fehlfunktionen vermieden werden können.

Die Aufgabe wird außerdem durch eine Einrichtung zur Aktualisierung von Firmware für Komponenten einer industriellen Automatisierungsanordnung gelöst, wobei für die Komponenten jeweils eine Anzahl Versionen der jeweiligen Firmware in jeweils unterschiedlichem Ausgabestand verfügbar ist, wobei Kompatibilitätsbeziehungen zwischen zumindest Versionen der Firmware von zumindest zwei unterschiedlichen Komponenten gegeben sind, wobei die Einrichtung Speichermittel zur Speicherung von Informationen über die aktuell in den Komponenten verwendeten Versionen der jeweiligen Firmware und zur Speicherung der Kompatibilitätsbeziehungen aufweist, und wobei die Einrichtung mit Kommunikationsmitteln zum Austausch von Informationen über Versionsinformationen der Firmware der Komponenten und zur Übertragung von Firmware-Daten oder Anweisungen zum Laden von Firmware an die Komponenten versehen ist. Die Einrichtung ist dabei zur Aktualisierung der Firmware einiger oder aller Komponenten der industriellen Automatisierungsanordnung vorgesehen, wobei die Einrichtung zur Ausführung des vorstehend beanspruchten Verfahrens ausgestaltet ist. Mit einer solchen Einrichtung lassen sich die in Bezug auf das Verfahren diskutierten Vorteile realisieren.

Vorteilhafte Ausgestaltungen des Verfahrens sind in den abhängigen Patentansprüchen angegeben. Die dabei diskutierten Merkmale und Vorteile gelten sinngemäß auch für die erfindungsgemäße Einrichtung. Die beschriebenen Ausgestaltungen können sowohl einzeln, als auch in Kombination miteinander realisiert werden.

Zur internen und ggf. auch zur Darstellung mittels einer Benutzeroberfläche wird vorteilhaft in einem ersten Schritt eine Anzahl Kompatibilitäts-Matrizen erzeugt. Außerdem werden im ersten Schritt in einer vorteilhaften Ausgestaltung zumindest für solche Komponenten paarweise die Kompatibilitätsbeziehungen gespeichert, die zum Datenaustausch untereinander vorgesehen sind und/oder die eine wechselseitige funktionale Abhängigkeit aufweisen; dadurch werden durch die erforderlichen Analysen (z.B. "Systemtests") inkonsistente Konstellationen vermieden.

In dem zweiten Schritt können vorteilhaft die Informationen durch einen jeweiligen automatischen Abruf von Versionsinformationen von der jeweiligen Komponente über ein Netzwerk an die Einrichtung übertragen werden; dies hat den Vorteil, dass nicht auf ggf. bereits veraltete Aufzeichnungen zurückgegriffen werden muss.

Oft sind mehrere Firmware-Versionen einer Komponente nutzbar. Dazu soll vorteilhaft im dritten Schritt in solchen Fällen, in denen mehrere Versionen der jeweiligen Firmware einer Komponente im Verbund mit den anderen Komponenten der Automatisierungsanordnung einsetzbar sind, die jeweils aktuellste Version und/oder die Version mit dem größten Funktionsumfang für die Aktualisierung vorgesehen werden. Ist bereits eine funktionsfähige, aber nicht die aktuellste / beste Version installiert, spricht man von einem "möglichen" Update, anderenfalls von einem "zwingenden".

Eine Kontrolle durch einen Supervisor o.ä. wird möglich, indem in dem vierten Schritt vor der Aktualisierung einer, mehrerer oder aller Komponenten in einem Nutzerdialog eine Freigabe oder eine Nutzerinformation über den Umfang der durchzuführenden Aktualisierungen eingeholt wird. Vorteilhaft werden in dem Nutzerdialog Angaben und Entscheidungsmöglichkeiten dargestellt, die zumindest zwischen möglichen und zwingend erforderlichen Aktualisierungen jeweils unterscheiden.

Im Falle nicht zwingender Aktualisierungen kann aus der Gesamtheit einiger oder aller jeweiliger Abweichungen zwischen der Version einer eingesetzten Firmware und der aktuellsten im Anlagenverbund einsetzbaren Version der jeweiligen Firmware ein quantitatives Maß über den gesamten Aktualisierungsbedarf der Automatisierungsanordnung gebildet und ausgegeben werden, beispielsweise durch Summierung der ausstehenden Versionssprünge. Vorteilhaft können auch ausgewählte "Rückstände" stärker gewichtet werden, etwa bei sicherheitskritischen Komponenten oder bei solchen, bei denen eine besonders "alte" Version der Firmware im Einsatz ist, also eine Vielzahl Versionssprünge ausstehen.

Außerdem kann eine Funktionalität vorteilhaft vorgesehen sein, durch die im Falle einer nicht-erfolgreichen Aktualisierung der Firmware einiger oder aller Komponenten der Automatisierungsanordnung einen vorhergehenden, beispielsweise den im zweiten Schritt festgestellten, Zustand wieder herzustellen.

Vorteilhaft werden nicht nur paarweise Konstellationen an Komponenten betrachtet, sondern die Kompatibilitätsbeziehungen zwischen mehr als zwei Komponenten berücksichtigt. Dadurch sind auch komplexe Abhängigkeiten handhabbar. Dazu kann vorteilhaft eine Anzahl Komponenten zu einer Gruppe zusammengefasst werden, wobei eine Kompatibilitätsbeziehung zwischen dieser Gruppe und einer weiteren Komponente oder einer anderen Gruppe berücksichtigt wird.

Ausführungsbeispiele des erfindungsgemäßen Verfahrens werden nachfolgend anhand der Zeichnungen erläutert; die dienen gleichzeitig der Erläuterung einer erfindungsgemäßen Einrichtung bzw. einer Anordnung aus der Einrichtung zur Aktualisierung von Firmware und den zu aktualisierenden Komponenten.

Dabei zeigt:
- Figur 1: in schematischer Darstellung eine Anordnung mit Komponenten, die mittels eines automatisierungsnetzwerks verknüpft sind,
- Figur 2: die paarweise Prüfung von Kompatibilitätsbeziehungen,
- Figur 3: eine Kompatibilitätsmatrix,
- Figur 4: Ein Priorisierung von verschiedenen Ausgabeständen bzw. Versionen von Firmware einzelner Komponenten,
- Figur 5: eine Priorisierung von Aktualisierungen von Komponenten in einem Anlagenverbund,
- Figur 6: ein Flussdiagramm für eine Aktualisierung unter Berücksichtigung einer Simulation,
- Figur 7: ein Struktur-Diagramm eines Engineeringsystems, welches als Einrichtung zur Aktualisierung von Firmware eingerichtet ist, und
- Figur 8: den Einfluss eines Austauschs von Komponenten auf eine installierte, aktive Firmware-Konstellation.

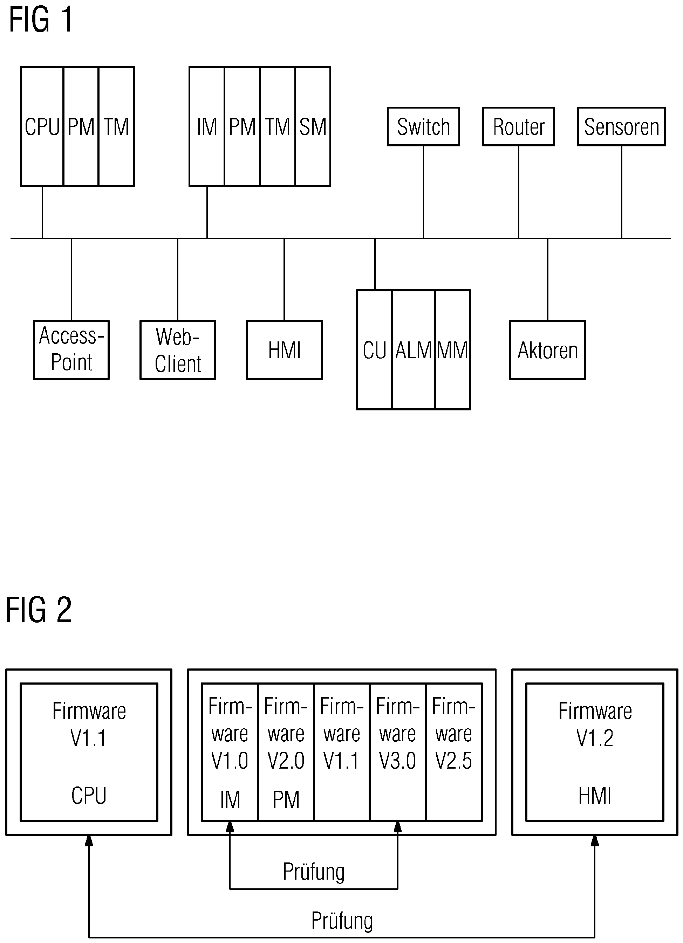

In der Figur 1 sind Firmware-basierte Geräte und andere Komponenten der Automatisierungs-, Antriebs-, Feld- und Netzwerktechnik im industriellen Umfeld dargestellt, z.B. speicherprogrammierbare Steuerungen, deren zentrale Peripherie- und Technologiebaugruppen, dezentrale Peripheriesysteme bzw. Feldgeräte, Netzkomponenten wie Switch, Router, Sensoren, Access Point, Web-Clients, Bediengeräte bzw. Human Machine Interface, antriebsbasierte Geräte wie Control Units, deren zugehörigen Systemkomponenten sowie Aktoren. Gekennzeichnet sind diese Geräte dadurch, dass sie durch ein Feldbussystem, z.B. PROFIBUS oder PROFINET, miteinander kommunizieren können.

Im Anlagenverbund können also sowohl Einzelgeräte der Automatisierungs- und Antriebstechnik angeordnet sein, deren Funktionsfähigkeit bereits durch eine einzelne Firmware-Datei sichergestellt werden kann (CPU, HMI, CU), als auch solche, die in anderen Systemen, welche modular aufgebaut sind und daher eine Anzahl von einzelnen Komponenten mit jeweils einer eigenen Firmware umfassen. In der Figur 2 sind als Beispiele für Einzelgeräte eine CPU und ein HMI-System verzeichnet, zudem ist ein modulares Feldgerät mit fünf Einzelkomponenten dargestellt. Modular aufgebaute Geräte wie z.B. das Feldgerät bestehen oft aus mindestens zwei Komponenten, dem Interfacemodul IM und mindestens einem Peripheriemodul PM. Jedes dieser Module besitzt regelmäßig eine eigene Firmware, welche auch bei ansonsten baugleichen Modulen oder Komponenten unterschiedlich sein kann.

Ein funktionelles Zusammenwirken ist dabei nur möglich, wenn die Firmware der Einzelkomponenten, z.B. Interfacemodul IM und Peripheriemodul PM, bezüglich der Firmware-Versionen aufeinander abgestimmt sind. Mögliche Abhängigkeiten können zusätzlich auch zwischen den Geräten bzw. Systemen in einem Automatisierungsverbund bestehen. In einem Engineeringsystem werden die Hardwarekomponenten mit ihren "Firmwareständen" (Ausgabestände der einzelnen Firmware-Versionen) zusammengestellt und auf Plausibilität und Konsistenz geprüft. Eine alternative oder zusätzliche Prüfung kann durch einen sog. Systemtest unter realen Bedingungen erfolgen.

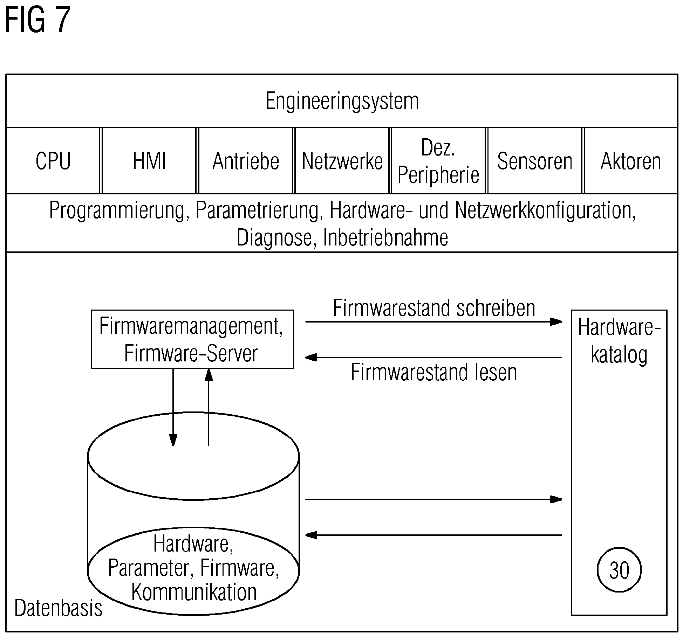

Ein Engineeringsystem, wie es in der Figur 7 schematisch dargestellt ist, stellt die Softwarearchitektur für die Projektierung aller Automatisierungs- und Antriebssysteme einer Automatisierungsanordnung zur Verfügung und dient der Programmierung, der Parametrierung, der Diagnose, der Inbetriebnahme und der Datenhaltung aller Geräte und Komponenten. Die Geräte stehen dem Anwender in Form eines Hardwarekataloges zur Verfügung und sind strukturiert abgelegt. Es besteht die Möglichkeit, den Hardwarekatalog zu ergänzen und mit neuen Geräten zu aktualisieren. Der Hardwarekatalog ist die Datenbasis der Geräte und deren Firmware-Ausgabestände.

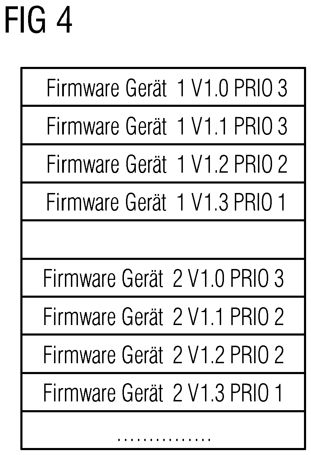

Die Firmware-Daten, die in der Figur 4 ausschnittsweise dargestellt sind, sind eindeutig zu den im Hardwarekatalog eingebundenen Gerätedaten zugeordnet. Die entsprechenden Firmware-Dateien können über Download- bzw. Importfunktionen in das Engineeringsystem hinzugefügt werden. Die Kompatibilität zwischen jeweiliger Firmware-Version und Gerätehardware-Version wird durch das Engineeringsystem sichergestellt.

Auf Basis dieses Hardwarekataloges erstellt der Anwender zunächst ein "Offline-Projekt". Dieses Offline-Projekt wird anschließend mit allen projektieren Hardwareeigenschaften in die Geräte und Komponenten geladen. Die dort geladene Konfiguration kann als "Online-Projekt" bezeichnet werden.

Ein Engineeringsystem dient allen Geräten oder auch nur für einzelne Komponenten als Projektierungsbasis. Das Engineeringsystem weist einer oder mehreren Komponenten des Automatisierungsverbundes die Funktion einer Einrichtung für Firmware-Aktualisierungen, eines sog. Firmware-Servers, zu. Insbesondere kann das Engineeringsystem selbst diese Funktion ausüben. Die Einrichtung versorgt alle im Automatisierungsverbund vorhandenen Geräte oder Komponenten mit den zugehörigen Firmware-Daten bzw. Dateien.

Es entsteht mit jeder projektierten Hardwarekonfiguration (Offline-Projekt) parallel eine Datenbasis. Diese Datenbasis enthält die Gerätedaten und die zugeordneten Firmware-Versionen. Die entstandene Datenbasis wird in dem Firmware-Server abgelegt.

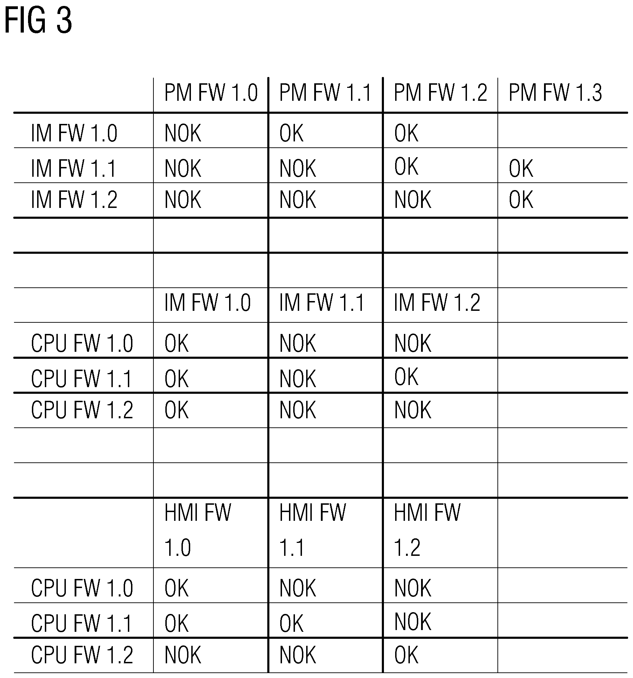

Neben der Bereitstellung der Firmware-Dateien selber ist deren Abhängigkeit untereinander von entscheidender Bedeutung. Wie in Figur 2 dargestellt, kann die Firmware von Einzelgeräten untereinander oder innerhalb skalierbarer Systeme funktional voneinander abhängig sein. Werden die Abhängigkeiten nicht berücksichtigt, sind Funktionsausfälle oder Funktionsstörungen der Komponenten im Zusammenwirken untereinander wahrscheinlich. Um die beschriebenen Abhängigkeiten abzubilden, verwaltet die Einrichtung, also der Firmware-Server, eine Kompatibilitätsmatrix; eine solche ist in der Figur 3 dargestellt. Die Kompatibilitätsmatrix wird im Rahmen des Systemtests der Einzelkomponenten definiert und mit jeder Firmware-Aktualisierung des Engineeringsystems dort bereitgestellt.

In der Figur 3 sind die verschiedenen Firmware-Versionen, z.B. mit Bezeichnungen wie FW 1.0, FW 1.1 oder dergleichen, zu den Komponenten IM, PM, CPU, HMI dargestellt. Dabei zeigt die Tabelle Einträge wie OK für kompatible Konstellationen, und Einträge wie NOK ("nicht o.k.") für problematische Konstellationen.

Wird nun ein Firmware-Update durchgeführt, so wird dieses unter Berücksichtigung der oben aufgeführten Zusammenhänge vorgeschlagen, so dass nur kompatible bzw. konsistente Konstellationen in den Produktivbetrieb genommen werden; dazu wird anhand der vorbeschriebenen Informationen die geplante Konstellation geprüft, ggf. einem Nutzer zur Bestätigung angezeigt, und danach die Updates durchgeführt oder, falls Probleme zu erwarten sind, verweigert.

Die bereits eingeführte Figur 4 zeigt zu den Ausgabeständen der Firmware zweier Komponenten Gerät 1, Gerät 2 jeweils eine Einzel-Priorisierung, die angibt, welche verfügbare Firmware-Version mit welcher Priorität (PRIO3 = niedrig; PRIO1 = hoch) aktualisiert werden soll. Dabei sind aber noch keine gegenseitigen Abhängigkeiten zwischen den Komponenten berücksichtigt.

Durch die in der Einrichtung ("Firmware-Server") zu jeder Firmware-Datei hinterlegte Priorisierung (vgl. Fig. 4) ist es möglich, notwendige Firmware-Updates zu priorisieren. Die Priorität einer Firmware wird bestimmt durch eine Klassifizierung der Inhalte:
- Einer größeren Anzahl empfohlener Firmware-Updates ("Aktualisierungs-Stau")
- Funktionserweiterung
- Fehlerbereinigung - Update zwingend erforderlich
- Fehlerbereinigung - Update erforderlich bei der nächsten Anlagenrevision
- Rolle des Teilnehmers im Automatisierungskonzept, z.B. CPU und HMI als Teilnehmer mit komplexen Funktionen, oder
   dezentrale Peripherie Stationen mit geringer Hardwarekomplexität
- Update kann im laufenden Betrieb durchgeführt werden
- Update sollte nicht im laufenden Betrieb durchgeführt werden.

Firmware-Updates können also bzgl. ihrer Dringlichkeit unterschiedlich bewertet werden. Ist ein Firmware-Update z.B. aufgrund einer Fehlerbereinigung dringend notwendig und führt ein nicht durchgeführtes Update zu einer potentiellen Anlagen- oder Betriebsstörung, kann dieses als hoch-prior abgelegt werden (PRIO1). Ist ein Firmware-Update aufgrund einer Funktionserweiterung erfolgt und wird diese Funktionserweiterung nicht unmittelbar im derzeitigen Projektierungsumfeld bzw. Einsatz-Szenario benötigt, so kann diese als niederprior definiert sein (PRIO3). Durch dieses Priorisierungsverfahren erhält der Anwender nun Hinweise, ob ein Firmware-Update unverzüglich, gelegentlich (z.B. nächste Anlagenwartung) oder ohne Notwendigkeit durchzuführen ist. Zusätzlich kann eine bestimmte Anzahl und Häufung von offenen Firmware-Updates als Schwellwert zur Kennzeichen einer notwendigen Aktualisierung herangezogen werden.

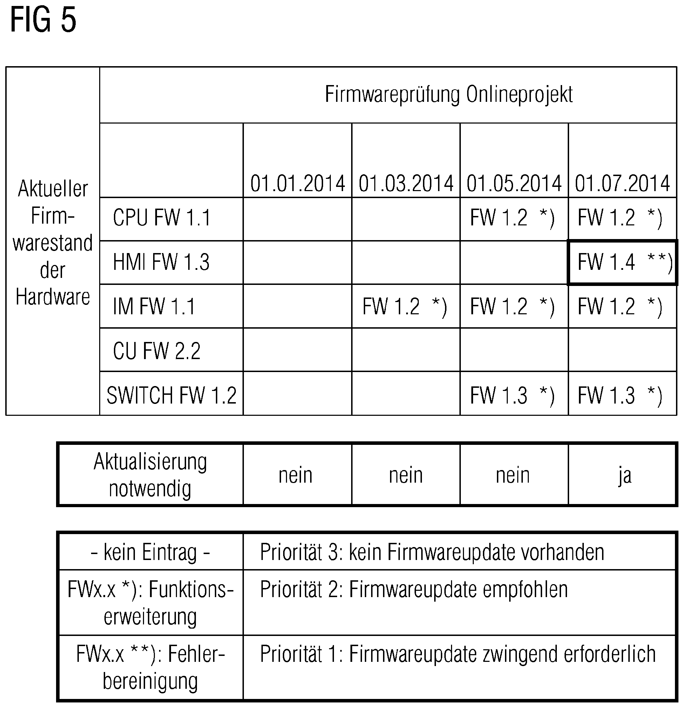

Die Figur 5 zeigt das Resultat der Prüfung, wobei ein Anwender die "Historie" der Ermittlung von tatsächlichen, produktiv verwendeten Firmware-Konstellationen sieht. Die Tabelle zeigt nur in solchen Feldern Einträge, in denen eine Aktualisierung der Firmware der jeweiligen Komponente verfügbar ist, und zwar unter Berücksichtigung der Kompatibilitätsbeziehungen mit den anderen Komponenten. Obwohl im gezeigten Beispiel für einige Komponenten schon bei den Überprüfungen am 01.03.2014 und am 01.05.2014 Updates verfügbar waren, ist erst am 01.07.2014 (letzte Spalte der Tabelle) ein zwingendes Update für die Komponente HMI verfügbar.

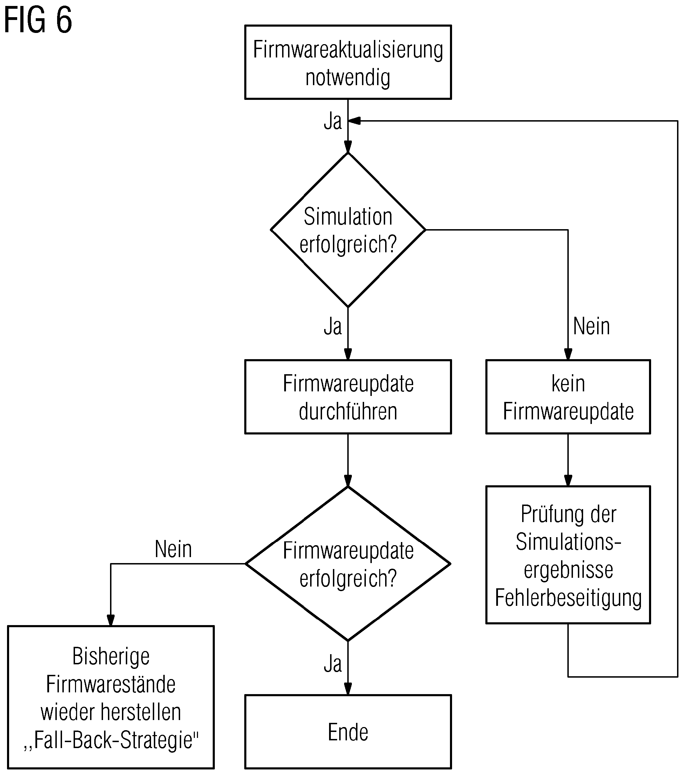

In einer vorteilhaften Ausgestaltung findet vor dem Update der Automatisierungsanordnung eine Simulation statt; ein Ablauf einer solchen ist in der Figur 6 schematisch dargestellt.

Durch das Simulationsverfahren wird vor dem eigentlichen Firmware-Update unter Berücksichtigung der Kompatibilitätsmatrix (siehe Figur 3) also die Durchführbarkeit überprüft. Nach erfolgreicher Simulation wird das Firmware-Update durchgeführt. Bei nicht erfolgreicher Simulation findet eine Prüfung der Simulationsergebnisse statt.

Die erfindungsgemäße Einrichtung kann auch den Soll-/Ist-Zustand der Firmware prüfen, also Differenzen zwischen der installierten und der projektierten Hardware- und Firmware-Konfiguration feststellen. Bei Differenzen stellt die Einrichtung ("Firmware-Server") die notwendige Firmware-Version für die betreffenden Geräte zur Verfügung. Diese können beispielsweise über Buskommunikation automatisch in die Geräte übermittelt und dort installiert werden.

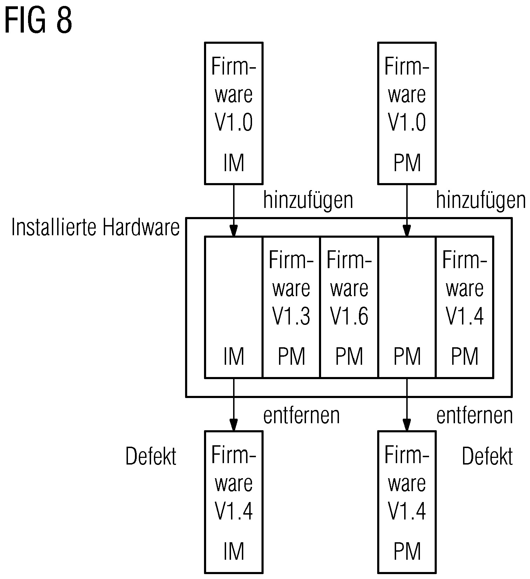

In der Figur 8 ist ein weiteres Anwendungsbeispiel der erfindungsgemäßen Einrichtung dargestellt. Sollen beispielsweise defekte Module oder dgl. durch Komponenten mit anderen Firmware-Versionen, also beispielsweise einer älteren Firmware-Version als das für die bisher verwendete Komponente projektiert war, ausgetauscht werden, ist die Funktionalität der Anlage möglicherweise bedroht. Der "Firmware-Server" stellt dem "neuen" Gerät dazu eine kompatible Firmware-Datei zur Verfügung. Die Initialisierung der Firmware-Datei im Gerät und den Modulen kann manuell oder automatisch erfolgen; dieses Verfahren wird im Engineeringsystem festgelegt.

Alternativ zum Update einzelner Komponenten im laufenden Betrieb kann auch zunächst das komplette "Offline-Projekt" aktualisiert werden, wobei zuerst jeder Hardwarekomponente die aktuelle Firmware-Version zugeordnet wird. Danach kann ein komplettes Aktualisieren des "Online-Projekts" erfolgen.

Eine erfindungsgemäße Einrichtung kann durch ein entsprechend geändertes Engineeringsystem aus dem Stand der Technik gebildet werden. Ein gebräuchliches Engineeringsystem verfügt in einer besonders vorteilhaften Ausgestaltung zusätzlich über:
- einen Mechanismus zum Bezug und Download der Firmware-Dateien von allen im Hardwarekatalog des Systems hinterlegten Geräten und Komponenten. Der Bezug dieser Dateien kann durch den Anwender aktiv initialisiert werden. Zusätzlich überprüft das Engineeringsystem bei bestehender Internetverbindung zum Hersteller selbstständig neue Firmware-Ausgabestände und weist den Anwender interaktiv auf diese hin. Der Bezug der Firmware-Dateien (Import) erfolgt dabei über die Herstellerseite im Internet und über eine Datenschnittstelle. Die Datenschnittstelle dient zum Import der vom Hersteller zusätzlich "Offline" bereitgestellten Firmware-Dateien, wenn keine Internetverbindung zur Verfügung steht (z.B. während der Inbetriebnahme o.ä.);
- ein Verfahren zum tabellarischen oder graphischen Abgleichs der Firmware-Ausgabestände im "Offline-Projekt" mit den tatsächlich in den Hardwarekomponenten befindlichen Firmware-Ausgabeständen des "Online-Projektes". Dabei soll es als Option möglich sein, dass das Offline-Projekt die Online vorgefunden Firmware-Ausgabestände wahlweise übernehmen kann;
- einen Mechanismus zur Ermittlung der im Offline-Projekt des Anwenders verwendenden Firmware-Ausgabestände von Geräten und Komponenten und einen Vergleich mit den in der Datenbasis des Engineeringsystems gespeicherten Firmware-Ausgabeständen. Eine tabellarische und/oder graphische Anzeige zeigt Unterschiede der Firmware-Ausgabestände komfortabel an;
- ein integriertes Verfahren zum Firmware-Update aller im Offline-Projekt projektierten Geräte und Komponenten, ohne dass der Anwender über Expertenwissen im Umgang mit dem Firmware-Update verfügen muss;
- einen Mechanismus und ein Regelwerk, um komplexere Firmware-Updates z.B. von modularen Geräten (Feldgeräte), deren Funktion vom korrekten Zusammenspiel mehrerer Firmware-Ausgabestände abhängig ist, optimiert handzuhaben, ohne dass der Anwender alle Einzel-Updates eines modular aufgebauten Gerätes selber manuell durchführen muss;
- ein Verfahren, um die Inhalte und Neuerungen der Firmware-Ausgabestände zu erkennen, zu unterscheiden und gegenüberzustellen;
- eine LOGBUCH-Funktion, welche die vorgenommen Firmware-Updates dokumentiert und nachverfolgbar und ggf. auch widerrufbar macht; und
- eine Selektionsmöglichkeit, um den Geräten (z.B. CPU, HMI, Engineeringsystem selber) die Funktion eines Firmware-Servers zuzuweisen

## Patentansprüche

1. Verfahren zur Aktualisierung von Firmware (FW) für Komponenten (IM, PM, CPU, HMI) einer industriellen Automatisierungsanordnung,
wobei für die Komponenten (IM, PM, CPU, HMI) jeweils eine Anzahl Versionen (1.0, 1.1, 1.2, 1.3) der jeweiligen Firmware (FW) in jeweils unterschiedlichem Ausgabestand verfügbar ist, und
wobei Kompatibilitätsbeziehungen (OK, NOK) zwischen zumindest einigen Versionen (1.0, 1.1, 1.2, 1.3) der Firmware (FW) unterschiedlicher Komponenten (IM, PM, CPU, HMI) gegeben sind,
wobei eine Einrichtung zur Aktualisierung der Firmware (FW) einiger oder aller Komponenten (IM, PM, CPU, HMI) der industriellen Automatisierungsanordnung vorgesehen ist, wobei vorgesehen ist,
dass in einem ersten Schritt für eine Anzahl, vorzugsweise alle, Komponenten (IM, PM, CPU, HMI) jeweils paarweise die Kompatibilitätsbeziehungen (OK, NOK) zwischen den verschiedenen Versionen (1.0, 1.1, 1.2, 1.3) der Firmware (FW) der jeweils betrachteten Komponenten (IM, PM, CPU, HMI) in einer Speichereinrichtung der Einrichtung gespeichert werden,
dass in einem zweiten Schritt Informationen über die in den Komponenten (IM, PM, CPU, HMI) aktuell verwendeten Versionen (1.0, 1.1, 1.2, 1.3) der jeweiligen Firmware (FW) in einer oder der Speichereinrichtung der Einrichtung gespeichert werden,
dass in einem dritten Schritt anhand der gespeicherten Kompatibilitätsinformationen und der Informationen über die aktuell verwendeten Versionen (1.0, 1.1, 1.2, 1.3) die zu aktualisierenden Komponenten (IM, PM, CPU, HMI) und die dabei jeweils verwendbaren Versionen (1.0, 1.1, 1.2, 1.3) der jeweiligen Firmware (FW) ermittelt werden, und
dass in einem vierten Schritt die zu aktualisierenden Komponenten (IM, PM, CPU, HMI) automatisch mit Firmware (FW) in der jeweils ermittelten Version aktualisiert werden,
**dadurch gekennzeichnet,**
**dass** vor dem vierten Schritt eine funktionale Simulation zumindest eines Teils der Automatisierungsanordnung unter Berücksichtigung der durch die Aktualisierung geplante Konstellation der Firmware (FW) durchgeführt wird.

2. Verfahren nach Patentanspruch 1,
**dadurch gekennzeichnet,**
**dass** in einem ersten Schritt eine Anzahl Kompatibilitäts-Matrizen erzeugt wird.

3. Verfahren nach Patentanspruch 1 oder 2,
**dadurch gekennzeichnet,**
**dass** im ersten Schritt zumindest für solche Komponenten (IM, PM, CPU, HMI) paarweise die Kompatibilitätsbeziehungen (OK, NOK) gespeichert werden, die zum Datenaustausch untereinander vorgesehen sind und/oder die eine wechselseitige funktionale Abhängigkeit aufweisen.

4. Verfahren nach einem der vorhergehenden Patentansprüche,
**dadurch gekennzeichnet,**
**dass** in dem zweiten Schritt die Informationen durch einen jeweiligen automatischen Abruf von Versionsinformationen von der jeweiligen Komponente über ein Netzwerk an die Einrichtung übertragen werden.

5. Verfahren nach einem der vorhergehenden Patentansprüche,
**dadurch gekennzeichnet,**
**dass** im dritten Schritt in den Fällen, in denen mehrere - Versionen (1.0, 1.1, 1.2, 1.3) der jeweiligen Firmware (FW) einer Komponente im Verbund mit den anderen Komponenten (IM, PM, CPU, HMI) der Automatisierungsanordnung einsetzbar sind, die jeweils aktuellste Version und/oder die Version mit dem größten Funktionsumfang für die Aktualisierung vorgesehen wird.

6. Verfahren nach einem der vorhergehenden Patentansprüche,
**dadurch gekennzeichnet,**
**dass** in dem vierten Schritt vor der Aktualisierung einer, mehrerer oder aller Komponenten (IM, PM, CPU, HMI) in einem Nutzerdialog eine Freigabe oder eine Nutzerinformation über den Umfang der durchzuführenden Aktualisierungen eingeholt wird.

7. Verfahren nach Patentanspruch 6,
**dadurch gekennzeichnet,**
**dass** in dem Nutzerdialog Angaben und Entscheidungsmöglichkeiten dargestellt werden, die zumindest zwischen möglichen und zwingend erforderlichen Aktualisierungen jeweils unterscheiden.

8. Verfahren nach Patentanspruch 7,
**dadurch gekennzeichnet,**
**dass** im Falle nicht zwingender Aktualisierungen aus der Gesamtheit einiger oder aller jeweiliger Abweichungen zwischen der Version einer eingesetzten Firmware (FW) und der aktuellsten im Anlagenverbund einsetzbaren Version der jeweiligen Firmware (FW) ein quantitatives Maß über den gesamten Aktualisierungsbedarf der Automatisierungsanordnung gebildet und ausgegeben wird.

9. Verfahren nach einem der vorhergehenden Patentansprüche,
**dadurch gekennzeichnet,**
**dass** vorgesehen ist, im Falle einer nicht-erfolgreichen Aktualisierung der Firmware (FW) einiger oder aller Komponenten (IM, PM, CPU, HMI) der Automatisierungsanordnung den im zweiten Schritt festgestellten Zustand wieder herzustellen.

10. Verfahren nach einem der vorhergehenden Patentansprüche,
**dadurch gekennzeichnet,**
**dass** zusätzlich zu den paarweisen Kompatibilitätsbeziehungen (OK, NOK) auch die Kompatibilitätsbeziehungen (OK, NOK) zwischen mehr als zwei Komponenten (IM, PM, CPU, HMI) berücksichtigt werden.

11. Verfahren nach Patentanspruch 10,
**dadurch gekennzeichnet,**
**dass** eine Anzahl Komponenten (IM, PM, CPU, HMI) zu einer Gruppe zusammengefasst werden, wobei eine Kompatibilitätsbeziehung (OK, NOK) zwischen dieser Gruppe und einer weiteren Komponente oder einer anderen Gruppe berücksichtigt wird.

12. Einrichtung zur Aktualisierung von Firmware (FW) für Komponenten (IM, PM, CPU, HMI) einer industriellen Automatisierungsanordnung,
wobei für die Komponenten (IM, PM, CPU, HMI) jeweils eine Anzahl Versionen (1.0, 1.1, 1.2, 1.3) der jeweiligen Firmware (FW) in jeweils unterschiedlichem Ausgabestand verfügbar ist, wobei Kompatibilitätsbeziehungen (OK, NOK) zwischen zumindest Versionen (1.0, 1.1, 1.2, 1.3) der Firmware (FW) von zumindest zwei unterschiedlichen Komponenten (IM, PM, CPU, HMI) gegeben sind,
wobei die Einrichtung Speichermittel zur Speicherung von Informationen über die aktuell in den Komponenten (IM, PM, CPU, HMI) verwendeten Versionen (1.0, 1.1, 1.2, 1.3) der jeweiligen Firmware (FW) und zur Speicherung der - Kompatibilitätsbeziehungen (OK, NOK) aufweist, und
wobei die Einrichtung mit Kommunikationsmitteln zum Austausch von Informationen über Versionsinformationen der Firmware (FW) der Komponenten (IM, PM, CPU, HMI) und zur Übertragung von Firmware (FW)-Daten oder Anweisungen zum Laden von Firmware (FW) an die Komponenten (IM, PM, CPU, HMI) versehen ist,
**dadurch gekennzeichnet,**
**dass** die Einrichtung zur Aktualisierung der Firmware (FW) einiger oder aller Komponenten (IM, PM, CPU, HMI) der industriellen Automatisierungsanordnung vorgesehen ist, wobei die Einrichtung zur Ausführung eines der vorstehend beanspruchten Verfahren ausgestaltet ist.

## Claims

1. Method for updating firmware (FW) for components (IM, PM, CPU, HMI) of an industrial automation system,
wherein a respective number of versions (1.0, 1.1, 1.2, 1.3) of the respective firmware (FW) is available in a respective different release state for the components (IM, PM, CPU, HMI), and
wherein compatibility relationships (OK, NOK) exist between at least some versions (1.0, 1.1, 1.2, 1.3) of the firmware (FW) of different components (IM, PM, CPU, HMI),
wherein a device for updating the firmware (FW) of some or all of the components (IM, PM, CPU, HMI) of the industrial automation system is provided, wherein there is provision that, in a first step, for a number, preferably all, of the components (IM, PM, CPU, HMI), the compatibility relationships (OK, NOK) between the various versions (1.0, 1.1, 1.2, 1.3) of the firmware (FW) of the respective components (IM, PM, CPU, HMI) under consideration are stored in each case in pairs in a memory device of the device,
that, in a second step, information about the versions (1.0, 1.1, 1.2, 1.3), currently being used in the components (IM, PM, CPU, HMI), of the respective firmware (FW) is stored in a or the memory device of the device,
that, in a third step, the stored compatibility information and the information about the versions (1.0, 1.1, 1.2, 1.3) currently being used is used to determine the components (IM, PM, CPU, HMI) to be updated and the respective versions (1.0, 1.1, 1.2, 1.3), able to be used in this case, of the respective firmware (FW), and
that, in a fourth step, the components (IM, PM, CPU, HMI) to be updated are updated automatically with firmware (FW) in the respectively determined version,
**characterized in that**,
prior to the fourth step, a functional simulation of at least part of the automation system is performed taking into consideration the constellation, planned by the update, of the firmware (FW).

2. Method according to Patent Claim 1,
**characterized in that**,
in a first step, a number of compatibility matrices is generated.

3. Method according to Patent Claim 1 or 2,
**characterized in that**,
in the first step, the compatibility relationships (OK, NOK) that are provided in order to exchange data with one another and/or that have mutual functional dependency are stored in pairs at least for such components (IM, PM, CPU, HMI).

4. Method according to one of the preceding patent claims,
**characterized in that**,
in the second step, the information is transmitted to the device by respectively automatically retrieving version information from the respective component via a network.

5. Method according to one of the preceding patent claims,
**characterized in that**,
in the third step, in cases in which a plurality of versions (1.0, 1.1, 1.2, 1.3) of the respective firmware (FW) of a component are able to be used in conjunction with the other components (IM, PM, CPU, HMI) of the automation system, the respectively most up-to-date version and/or the version having the greatest functional scope is provided for the update.

6. Method according to one of the preceding patent claims,
**characterized in that**,
in the fourth step, prior to the updating of one, a plurality of or all of the components (IM, PM, CPU, HMI), an approval or user information about the scope of the updates to be performed is ascertained in a user dialogue.

7. Method according to Patent Claim 6,
**characterized in that**
the user dialogue presents information and decision options that in each case draw a distinction at least between possible and mandatorily required updates.

8. Method according to Patent Claim 7,
**characterized in that**,
in the event of non-mandatory updates, a quantitative measure of the overall update requirement of the automation system is formed and output from the entirety of some or all respective discrepancies between the version of firmware (FW) being used and the most up-to-date version of the respective firmware (FW) able to be used in the system assembly.

9. Method according to one of the preceding patent claims,
**characterized in that**
there is provision that, in the case of an unsuccessful update of the firmware (FW), some or all of the components (IM, PM, CPU, HMI) of the automation system re-establish the state defined in the second step.

10. Method according to one of the preceding patent claims,
**characterized in that**,
in addition to the compatibility relationships in pairs (OK, NOK), the compatibility relationships (OK, NOK) between more than two components (IM, PM, CPU, HMI) are also taken into consideration.

11. Method according to Patent Claim 10,
**characterized in that**
a number of components (IM, PM, CPU, HMI) are combined to form a group, wherein a compatibility relationship (OK, NOK) between this group and a further component or another group is taken into consideration.

12. Device for updating firmware (FW) for components (IM, PM, CPU, HMI) of an industrial automation system,
wherein a respective number of versions (1.0, 1.1, 1.2, 1.3) of the respective firmware (FW) is available in a respective different release state for the components (IM, PM, CPU, HMI),
wherein compatibility relationships (OK, NOK) exist between at least versions (1.0, 1.1, 1.2, 1.3) of the firmware (FW) of at least two different components (IM, PM, CPU, HMI),
wherein the device has memory means for storing information about the versions (1.0, 1.1, 1.2, 1.3), currently being used in the components (IM, PM, CPU, HMI), of the respective firmware (FW) and for storing the compatibility relationships (OK, NOK), and
wherein the device is provided with communication means for exchanging information about version information of the firmware (FW) of the components (IM, PM, CPU, HMI) and for transmitting firmware (FW) data or instructions for loading firmware (FW) to the components (IM, PM, CPU, HMI),
**characterized in that**
the device is provided in order to update the firmware (FW) of some or all of the components (IM, PM, CPU, HMI) of the industrial automation system, wherein the device is configured so as to execute one of the methods claimed above.

## Revendications

1. Procédé de mise à jour de microprogrammes (FW) pour des composants (IM, PM, CPU, HMI) d'un système d'automatisation industriel,
dans lequel, pour les composants (IM, PM, CPU, HMI), est disponible, respectivement, un nombre de versions (1.0, 1.1, 1.2, 1.3) du microprogramme (FW) respectif dans un état d'édition différent, respectivement, et
dans lequel il y a des relations (OK, NOK) de compatibilité entre au moins certaines versions (1.0, 1.1, 1.2, 1.3) des microprogrammes (FW) de composants (IM, PM, CPU, HMI) différents,
dans lequel il est prévu un dispositif de mise à jour des microprogrammes (FW) de certains ou de tous les composants (IM, PM, CPU, HMI) du système d'automatisation industriel, dans lequel il est prévu, dans un premier stade, de mettre en mémoire, dans un dispositif de mémoire du dispositif, pour un certain nombre, de préférence pour tous les composants (IM, PM, CPU, HMI), respectivement, par paire, les relations (OK, NOK) de compatibilité entre les versions (1.0, 1.1, 1.2, 1.3) différentes des microprogrammes (FW) des composants (IM, PM, CPU, HMI) considérés, respectivement,
en ce que, dans un deuxième stade, il est mis en mémoire, dans un dispositif de mémoire ou dans le dispositif de mémoire du dispositif, des informations sur les versions utilisées en cours dans les composants (IM, PM, CPU, HMI) des microprogrammes (FW) respectifs,
en ce que, dans un troisième stade, à l'aide des informations de compatibilité mises en mémoire et des informations sur les versions (1.0, 1.1, 1.2, 1.3) utilisées en cours, on détermine les composants (IM, PM, CPU, HMI) à mettre à jour et les versions (1.0, 1.1, 1.2, 1.3) utilisables à cet égard, respectivement, des microprogrammes (FW) respectifs, et
en ce que, dans un quatrième stade, on met à jour les composants (IM, PM, CPU, HMI) à mettre à jour automatiquement par des microprogrammes (FW) dans la version déterminée, respectivement,
**caractérisé**
**en ce qu'**avant le quatrième stade, on effectue une simulation fonctionnelle d'au moins une partie du système d'automatisation en tenant compte de la constellation, projetée par la mise à jour, des microprogrammes (FW).

2. Procédé suivant la revendication 1,
**caractérisé**
**en ce que** dans un premier stade, on produit un certain nombre de matrices de compatibilité.

3. Procédé suivant la revendication 1 ou 2,
**caractérisé**
**en ce que**, dans le premier stade, on met, au moins pour les composants (IM, PM, CPU, HMI), en mémoire, par paire, les relations (OK, NOK) de compatibilité, qui sont prévues pour l'échange de données mutuelles et/ou qui ont une dépendance fonctionnelle réciproque.

4. Procédé suivant l'une des revendications précédentes,
**caractérisé**
**en ce que**, dans le deuxième stade, on transmet les informations par un appel automatique respectif d'informations de version du composant respectif au dispositif par un réseau.

5. Procédé suivant l'une des revendications précédentes,
**caractérisé**
**en ce que**, dans le troisième stade, dans les cas où on peut utiliser plusieurs versions (1.0, 1.1, 1.2, 1.3) des microprogrammes (FW) respectifs d'un composant en liaison avec les autres composants (IM, PM, CPU, HMI) du système d'automatisation, on prévoit la version la plus en cours et/ou la version ayant l'étendue fonctionnelle la plus grande pour la mise à jour.

6. Procédé suivant l'une des revendications précédentes,
**caractérisé**
**en ce que**, dans le quatrième stade, avant la mise à jour d'un, de plusieurs ou de tous les composants (IM, PM, CPU, HMI), on va chercher, dans un dialogue d'utilisateur, une validation ou une information d'utilisateur sur l'étendue des mises à jour à effectuer.

7. Procédé suivant la revendication 6,
**caractérisé**
**en ce que**, dans le dialogue d'utilisateur, sont représentées des indications et des possibilités de décision, qui distinguent, respectivement, au moins entre des mises à jour possibles et nécessaires obligatoirement.

8. Procédé suivant la revendication 7,
**caractérisé**
**en ce que**, dans le cas de mises à jour non-obligatoires, on forme et on édite, à partir de l'ensemble de certains ou de tous les écarts respectifs entre la version d'un microprogramme (FW) utilisée et la version pouvant être utilisée la plus en cours dans l'ensemble d'usine, une mesure quantitative sur le besoin total de mises à jour du système d'automatisation.

9. Procédé suivant l'une des revendications précédentes,
**caractérisé**
**en ce qu'**il est prévu, dans le cas d'une mise à jour non couronnée de succès des microprogrammes (FW) de certains ou de tous les composants (IM, PM, CPU, HMI) du système d'automatisation, de produire à nouveau l'état fixé dans le deuxième stade.

10. Procédé suivant l'une des revendications précédentes,
**caractérisé**
**en ce qu'**en plus des relations (OK, NOK) de compatibilité par paire, on prend en compte aussi les relations (OK, NOK) de compatibilité entre plus de deux composants (IM, PM, CPU, HMI).

11. Procédé suivant la revendication 10,
**caractérisé**
**en ce que** l'on rassemble un certain nombre de composants (IM, PM, CPU, HMI) en un groupe, dans lequel on tient compte d'une relation (OK, NOK) de compatibilité entre ce groupe et un autre composant ou un autre groupe.

12. Dispositif de mise à jour de microprogrammes (FW) pour des composants (IM, PM, CPU, HMI) d'un système d'automatisation industriel,
dans lequel, pour les composants (IM, PM, CPU, HMI), est disponible, respectivement, un nombre de versions (1.0, 1.1, 1.2, 1.3) du microprogramme (FW) respectif dans un état d'édition différent, respectivement,
dans lequel il y a des relations (OK, NOK) de compatibilité entre au moins des versions (1.0, 1.1, 1.2, 1.3) des microprogrammes (FW) d'au moins deux composants (IM, PM, CPU, HMI) différents,
dans lequel le dispositif a des moyens de mise en mémoire d'informations sur les versions (1.0, 1.1, 1.2, 1.3) des microprogrammes (FW) respectifs en cours d'utilisation dans les composants (IM, PM, CPU, HMI) et pour la mise en mémoire des relations (OK, NOK) de compatibilité, et
le dispositif est pourvu de moyens de communication pour échanger des informations sur des informations de versions des microprogrammes (FW) des composants (IM, PM, CPU, HMI) et pour transmettre des données de microprogrammes (FW) ou des instructions de chargement de microprogrammes (FW) sur les composants (IM, PM, CPU, HMI),
**caractérisé**
**en ce que** le dispositif est prévu pour la mise à jour des microprogrammes (FW) de certains ou de tous les composants (IM, PM, CPU, HMI) du système d'automatisation industriel, le dispositif étant conformé pour l'exécution d'un procédé revendiqué précédemment.
